(19) Europäisches Patentamt / European Patent Office / Office européen des brevets

(11) **EP 2 490 905 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(51) Int Cl.:
**B60C 23/04** (2006.01)

(21) Anmeldenummer: **10771653.2**

(22) Anmeldetag: **08.10.2010**

(86) Internationale Anmeldenummer:
**PCT/EP2010/006172**

(87) Internationale Veröffentlichungsnummer:
**WO 2011/047791 (28.04.2011 Gazette 2011/17)**

(54) **BEFESTIGUNGSSYSTEM ZUR ANBRINGUNG VON HALTERUNGEN AN ELASTOMEREN BAUTEILEN**

FIXATON FOR MOUNTING OF CARRIERS ON ELASTOMERIC COMPONENTS

SYSTEME DE FIXATION POUR LA FIXATION DE CROCHETS SUR ELEMENTS ELASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2009 DE 102009050268**

(43) Veröffentlichungstag der Anmeldung:
**29.08.2012 Patentblatt 2012/35**

(73) Patentinhaber: **Rema Tip Top AG**
**85586 Poing (DE)**

(72) Erfinder:
• **SCHEUNGRABER, Patric**
**85652 Pliening (DE)**
• **NIEMANN, Claudia**
**80999 München (DE)**

(74) Vertreter: **MERH-IP Matias Erny Reichl Hoffmann Patentanwälte PartG mbB**
**Paul-Heyse-Strasse 29**
**80336 München (DE)**

(56) Entgegenhaltungen:
**EP-A2- 1 048 493    EP-A2- 1 070 580**
**WO-A1-03/095243**

• **3M: "Scotch-Weld TM Schmelzklebstoffe", , [Online] XP002617726, 3M Gefunden im Internet: URL:http://www.bossert-hamburg.de/3M_JetMelt_ScotchWeld_052006.pdf> [gefunden am 2011-01-21]**
• **RUDERER KLEBETECHNIK GMBH TECHNICOLL: "Thermoplastische Schmelzklebestoffe", , [Online] XP002617727, Ruderer Klebetechnik GmbH Gefunden im Internet: URL:http://www.technicoll.eu/de/catalog/category/thermoplastische-schmelzklebstoffe/12/> [gefunden am 2011-01-21]**
• **3M DEUTSCHALND GMBH, NEUSS: "VHBTM Hochleistungs-verbindungssytme 4905, 4910, 4915, 4918 - Produktinformation 11/2004", , [Online] 30. November 2004 (2004-11-30), XP002617761, Gefunden im Internet: URL:http://www.glsgmbh.de/pdf/herstellerprospekte/3m/klebebaender_4905f-4918f.pdf> [gefunden am 2011-01-21]**

EP 2 490 905 B1

**Beschreibung**

Die vorliegende Erfindung betrifft ein Befestigungssystem zur Anbringung von Halterungen an elastomeren Bauteilen, bspw. zum Verbinden von Sensoren bzw. Sensorhalterungen mit dem Innerliner eines Fahrzeugreifens. Das erfindungsgemäße Befestigungssystem ermöglicht eine schnelle, dauerhafte und bei Bedarf wieder reversibel lösbare Verbindung an einem elastomeren Bauteil. Weiterhin eignet sich das erfindungsgemäße Befestigungssystem zum Anbringen sowohl von steifen als auch nicht steifen Komponenten an einem elastomeren Bauteil.

Im Zuge der Integration von elektronischen Bauteilen bzw. Systemen in verschiedenartige elastomere Bauteile wie z. B. in einen Fahrzeugreifen, an ein Förderband etc., ergibt sich bei der Neuherstellung bzw. im Rahmen einer Nachrüstung die Notwendigkeit, jeweils Bauteile mit stark unterschiedlichen Materialeigenschaften sicher miteinander zu verbinden.

Besondere Berücksichtigung erfordert zudem die Art der Beanspruchung des elastomeren Bauteils, bei der eine dauerfeste Verbindung der zu verbindenden Komponenten sichergestellt sein muss. So sind elastomere Bauteile im Betrieb zumeist einer Biege(wechsel)beanspruchung unterworfen, was zu einer zumeist lokal begrenzten elastischen Verformung unter gleichzeitiger Wärmeentwicklung führt. Dabei darf sich die Verbindung des elastomeren Bauteils mit der Halterung unter Belastung bzw. aufgrund der Erwärmung nicht lösen.

Insbesondere in der Automobilindustrie werden in wachsendem Umfang sogenannte Luftdruckkontrollsysteme für die einzelnen Fahrzeugreifen eingesetzt. Bei den aktiven Systemen ist der Fahrzeugreifen im Inneren mit einem Sensor ausgerüstet, der den Luftdruck erfasst und daher mit dem Reifen in kraftschlüssiger Verbindung stehen muss. Die elektronischen Bauteile des Sensors sind in der Regel in Kunststoff eingegossen und werden über einen Halter aus einem elastomeren Material mit dem Fahrzeugreifen verbunden. Der Einbau des sensors erfolgt dabei in einem der eigentlichen Reifenherstellung nachgeschalteten Arbeitsschritt.

WO 03/095243 A1 offenbart ein Befestigungssystem zur Befestigung eines Sensors an einem Reifen. Hierbei wird der Sensor bzw. die Sensorhalterung mittels eines Patches am Innerliner des Reifens befestigt. Das Patch kann aus Gummi oder einem thermoplastischen Elastomer hergestellt sein. 3M: "Scotch-Weld TM Schmelzklebstoffe", XP002617726, 3M, gefunden im Internet: URL: htto://www.bossert-hamburg.de/3M JetMelt ScotchWeld 052006.pdf offenbart Schmelzklebstoffe eines Herstellers für verschiedene Werkstoffe, darunter "Gummi".

RUDERER KLEBETECHNIK GMBH TECHNICOLL: "Thermoplastische Schmelzklebestoffe", Ruderer Klebetechnik GmbH, gefunden im Internet: URL: http://www.technicol.eu/de/catalog/category/ thermoplastische-schmelzklebstoffe/12/ offenbart die Verwendung von thermoplastischen Schmelzklebstoffen zum wiederablösbaren (reversiblen) Kleben/Verbinden von Gegenständen.

EP 1070 580 A2 offenbart ein Befestigungssystem, um einen Artikel, z.B. einen Mikrochip, an der Innenseite eines Reifens zu befestigen. Hierzu wird die Verwendung zweier Klebeschichten 1 und 2 vorgeschlagen, wobei jeweils eine Klebeschicht 1 auf die Reifeninnenseite aufgebracht wird und die zweite Klebeschicht 2 auf einer Seitenfläche des zu befestigenden Artikels 3. Anschließend wird der Artikel 3 an der Reifeninnenseite befestigt, in dem die beiden Klebeschichten miteinander in Kontakt gebracht werden. Das Verfahren erfordert einen Vulkanisationsvorgang in Kombination mit einer Maskenschicht M.

EP 1 048 493 A2 offenbart ein Befestigungsverfahren, bei dem mittels eines "Patches" und Klebstoffs ein Sensor an einem Reifen befestigt wird. Gemäß Abschnitt [0027] kann die Sensorvorrichtung mit einem thermoplastischen Klebstoff am Innerliner des Reifens befestigt werden.

Eine Halterung zur Befestigung eines elektronischen Bauelements an einem Gummiartikel ist aus der EP 1 707 406 B1 bekannt. Die Verbindung zwischen der Halterung und dem Gummiartikel erfolgt hierbei über einen Vulkanisationsvorgang. Nachteilig sind hier der relativ zeitaufwendige und arbeitsintensive Befestigungsvorgang und zudem auch die Notwendigkeit der Verwendung von einem Vulkanisationsmittel.

Um die Verwendung eines Vulkanisationsmittels zu umgehen und eine sichere Befestigung der Halterung zu ermöglichen wäre es denkbar, an der Innenseite des Fahrzeugreifens vorstehende bzw. als Vertiefung ausgeführte Elemente während der Reifenherstellung aufzubringen bzw. entsprechende Befestigungselemente nachträglich an der Innenseite des Fahrzeugreifens anzubringen. Nachteilig bei diesem Prozess sind jedoch im Falle der bei der Neureifenherstellung angebrachten Befestigungselemente die relativ aufwendigen, im Fertigungsprozess störenden Geometrieveränderungen an der Innenseite des Fahrzeugreifens und somit der dadurch entstehende erhebliche Mehraufwand bis hin zu einer möglichen Qualitätseinschränkung von derart erzeugten Fahrzeugreifen. Durch die lokale Massendifferenz kann dadurch auch eine eventuell nicht unerhebliche Unwucht des Fahrzeugreifens erzeugt werden.

Darüber hinaus weisen diese Fahrzeugreifen im Falle einer Nichtverwendung der Befestigungselemente unnötigerweise die Befestigungselemente auf, welche ggf. bei der weiteren Nutzung störend wirken bzw. nach einem Entfernen nicht wieder angebracht werden können.

Nachteilig an den vorstehend beschriebenen Verfahren ist einerseits die Notwendigkeit der Vorbehandlung des Fahrzeugreifens an der zur Verbindung vorgesehenen Stelle, andererseits der Zeitaufwand für den Klebstoffauftrag und die erforderliche Trockenzeit nach dem Verkleben. Weiterhin ist der Einsatz von lösemittelhaltigen Zubereitungen notwendig, deren Einsatz - soweit möglich - zunehmend vermieden werden sollte.

Es ist eine Aufgabe der vorliegenden Erfindung, eine Halterung zur Anbringung an ein elastomeres Bauteil, ein elastomeres Bauteil, das die Anbringung der Halterung erlaubt sowie ein Verfahren zur Befestigung der Halterung an dem elastomeren Bauteil bereitzustellen, wobei sich der Montageaufwand verringert, eine sichere und dauerhafte Verbindung besteht und ein reversibles zerstörungsfreies Lösen der Verbindung möglich ist.

Diese Aufgabe wird erfindungsgemäß durch die Merkmale der unabhängigen Ansprüche, sowie durch ein Verfahren gemäß Anspruch 24 gelöst. Vorteilhafte Ausgestaltungen und bevorzugte Ausführungsbeispiele der Erfindung sind in den Unteransprüchen angegeben.

Im folgenden werden die Begriffe ,erstes Verbindungselement' und ,thermoplastische Verbindungsschicht' in der Beschreibung äquivalent verwendet. Dasselbe gilt für die Verwendung der Begriffe ,zweites Verbindungselement' und 'Kontaktelement', sowie für die Begriffe 'Hauptkörperelement' und 'Hauptkörper'.

Es wird eine Halterung zur Aufnahme eines elektronischen Bauteils, insbesondere eines Sensors, bereitgestellt, die einen Hauptkörper bzw. ein Hauptkörperelement, der mit dem elektronischen Bauteil in Kontakt kommt und aus einem Hauptkörpermaterial besteht. Des Weiteren kann der Hauptkörper eine Übergangsschicht, die mit dem Hauptkörper verbunden ist, umfassen. Des Weiteren umfasst die Halterung eine thermoplastische Verbindungsschicht bzw. ein erstes Verbindungselement, wobei diese mit der Übergangsschicht verbunden sein kann. Die thermoplastische Verbindungsschicht kann derart ausgebildet sein, dass sie durch einen vorangegangenen Anschmelzvorgang in eine reversible mechanische Verbindung mit einem Kontaktelement bzw. einem zweiten Verbindungselement bringbar ist. Des Weiteren kann zumindest das erste oder zweite Verbindungselement ein thermoplastisches Verbindungselement sein, das durch einen vorangegangenen Anschmelzvorgang mit dem jeweilig anderen Verbindungselement in die reversible Verbindung bringbar ist.

Mit dem vorliegenden Befestigungssystem wird ein System gebildet, welches die Halterung sowie das elastomere Bauteil umfasst, die mittels einer reversiblen Verbindung miteinander verbunden sind.

Das erste Verbindungselement kann als eine Schicht aus einem thermoplastischen Werkstoff ausgebildet sein, während das zweite Verbindungselement ebenfalls als eine Schicht aus einem thermoplastischen Werkstoff ausgebildet sein kann. Weiterhin kann das erste Verbindungselement aus einem nicht-thermoplastischen Werkstoff ausgebildet sein, bspw. als ein Gewebe oder eine gewebeartige Struktur, und das zweite Verbindungselement kann als eine Schicht aus einem thermoplastischen Werkstoff ausgebildet sein. Weiterhin kann das erste Verbindungselement aus einem thermoplastischen Werkstoff gebildet sein und das zweite Verbindungselement aus einem nichtthermoplastischen Werkstoff, bspw. als ein Gewebe oder eine gewebeartige Struktur.

Das vorliegende Befestigungssystem zeichnet sich dadurch aus, dass die beiden Verbindungselemente entweder identische bzw. ähnliche Materialeigenschaften aufweisen oder aber voneinander verschiedene Materialeigenschaften aufweisen können, wobei der Anschmelzvorgang für dasjenige Verbindungselement, welches das thermoplastische Verbindungselement ist, vor dem Zusammenfügen der beiden Verbindungselemente stets erforderlich ist.

Zusätzlich können die jeweiligen vorstehend erwähnten Ausgestaltungen der Verbindungselemente an der Halterung bzw. an dem elastomeren Bauteil im Rahmen des vorliegenden Befestigungssystems wechselseitig ausgetauscht werden. Somit lässt sich das Befestigungssystem für eine Vielzahl von Anwendungen einsetzen, wobei die Gestaltung der beiden Verbindungselemente jeweils auf die zu verbindenden Bauteile bzw. die Einsatzrandbedingungen angepasst werden kann.

Die Halterung kann sowohl ein steifes Element als auch ein verformbares Element sein. Im Folgenden sollen unter dem Begriff "steifes Element" diejenigen Elemente verstanden werden, die nicht dazu in der Lage sind, bspw. während des Abrollens eines Fahrzeugreifens den dabei auftretenden wiederholten Verformungen des Fahrzeugreifens zu folgen. Entsprechendes gilt in allgemeinerer Form für die Verbindung eines steifen Elements mit einem beliebigen elastomeren Bauteil. Diese steifen Elemente können entweder nahezu vollkommen unverformbar oder (teilweise) verformbar sein, wobei die elastischen Verformungen des elastomeren Bauteils um ein Vielfaches größer sind. Sie sind in der Lage, sich unter Belastung zu verbiegen, während sie lokale Schwankungen des Flächeninhalts des elastomeren Bauteils aufgrund der zeitlich sich ändernden Krümmungsradien des elastomeren Bauteils nicht nachbilden.

Der Erfindung liegt das Prinzip der mechanischen/physikalischen Bindungskräfte beim Fügen zweier Flächen zugrunde. Die übertragbare Kraft ist das Produkt aus verfügbarer Fläche und verfügbarer Bindekraft. Da die mechanischen/physikalischen Bindekräfte in der Regel gering sind, ist eine möglichst große wirksame Fläche notwendig, um eine belastbare Verbindung zu gewährleisten. Da die mechanischen/physikalischen Bindekräfte nicht in großem Umfang variiert werden können, wird eine Vergrößerung der wirksamen Oberfläche angestrebt. Hierzu wird der Werkstoff der thermoplastischen Verbindungsschicht auf eine vorbestimmte Temperatur erwärmt, so dass dieser eine derartige Viskosität erreicht, bei der eine Infiltrierung der Kontaktseite des Kontaktelements mit der gewünschten Eindringtiefe unter gleichzeitigem Anpressen der Halterung an das Kontaktelement entsteht. Das Anpressen der Halterung wird solange mit einem geeigneten Druck fortgesetzt, bis die erwärmte thermoplastische Verbindungsschicht auf eine vorbestimmte Temperatur abgekühlt ist, bei der nach einer Wegnahme des Anpressdrucks die Halterung an der Fügestelle mit dem elastomeren Bauteil sicher verbleibt.

Anwendungsbeispiele für das Befestigungssystem können beispielsweise Fahrzeugreifen mit Kennzeichnungstags (bspw. für die Speicherung von Herstellungsdaten) bis hin zu passiven oder aktiven Sensoren zur Erfassung von Zustandssituationen (Temperatur, Reifenfülldruck, Beschleunigung etc.) sein. Das Befestigungssystem kann auch z.B. vorteilhaft zum Anbringen von Sensoren an Förderbändern eingesetzt werden.

Es wird im Rahmen der Herstellung des elastomeren Bauteils im Bereich der späteren Oberfläche (z. B. Reifeninnenseite / Fördergurtdeckplatte) eine in ihrer Größe und Dicke definierte Anbindungsfläche in Form eines flächigen, bspw. ausgestanzten Kontaktelementes im Zuge der Fertigung des elastomeren Bauteils beigelegt. Durch entsprechende Verbindungseigenschaften des beigelegten Kontaktelements und die somit sichergestellte irreversible Anbindung an das jeweilige Material des elastomeren Bauteils, wie z. B. Reifeninnerliner, erfolgt im Rahmen der späteren Vulkanisation die dauerhafte, nahtlose und, insbesondere mit der Oberfläche des elastomeren Bauteils bündig abschließende, Anbindung des Kontaktelementes. Nach der Fertigstellung des elastomeren Bauteils kann die daran zu befestigende Halterung durch einen thermoplastischen Schmelzvorgang an das Kontaktelement an der Oberfläche des elastomeren Bauteils dauerhaft und sicher angebunden werden.

Das Befestigungssystem hat zudem den Vorteil, dass dadurch die Verbindung der Halterung mit dem elastomeren Bauteil durch Erwärmen der thermoplastischen Verbindungsschicht sogar mehrmals wieder zerstörungsfrei reversibel lösbar ist.

Zusätzlich bietet das Befestigungssystem im Vergleich zu einem Klebe- oder Vulkanisationsverfahren den Vorteil, dass vor dem Befestigen der Halterung keine Vorbereitung der Kontaktfläche am elastomeren Bauteil mehr erforderlich ist und der Fügeprozess ohne Zugabe eines weiteren Mediums stattfindet. Neben der Zeitersparnis ergibt sich damit ein positiver Umweltaspekt, da nunmehr keine Emissionen, bspw. in Form von umweit- oder gesundheitsschädlichen Dämpfen, freigesetzt werden.

Für das Kontaktelement wird vorzugsweise eine Struktur verwendet, die beidseitig eine möglichst große Oberfläche innerhalb einer bestimmten Fläche mit einer möglichst großen räumlichen Struktur (hohe spezifische Oberfläche) aufweist. Hierfür eignen sich besonders Gewebe oder gewebeähnliche Strukturen. Ein einfaches Beispiel für eine erfindungsgemäße Struktur ist ein Kreuzgewebe, bestehend aus natürlichen und/oder synthetischen Fasern. Die Auslegung des Gewebes hinsichtlich seiner Verformbarkeit ist so zu wählen, dass das Material den jeweils im elastomeren Bauteil auftretenden elastischen Verformungen folgen kann. Die Verwendung eines Gewebes erweist sich zudem als ein kostengünstiges Kontaktelement, das in vielfältigen Ausführungen verfügbar ist.

Bei der Wahl des Gewebes ist darauf zu achten, dass es hinreichend dicht ist, so dass die Durchdringung des Materials des elastomeren Bauteils während dessen Herstellungsprozess, bspw. des Vulkanisationsprozesses, kontrolliert werden kann.

Die mit dem Gewebe bzw. dem Kontaktelement in Kontakt kommende thermoplastische Verbindungsschicht der Halterung kann vorzugsweise eine Dicke zwischen 0,3 mm und 3,0 mm aufweisen.

Des Weiteren kann bei einer Halterung das Kontaktelement eine derartige Oberfläche aufweisen, dass eine spezifische Scherkraft von zumindest 2,5 N/mm bei 20°C zwischen dem Kontaktelement und der thermoplastischen Verbindungsschicht vorliegt, wobei das Kontaktelement insbesondere ein Gewebe oder ein gewebeähnliches Material ist. Unter der spezifischen Scherkraft soll im Folgenden der Schälwiderstand gemäß DIN EN 28510 / ISO 8510 verstanden werden. Der Schälwiderstand ergibt sich als Quotient der Trenn kraft und der Probenbreite.

Des Weiteren kann bei einer Halterung das Kontaktelement eine derartige Oberfläche aufweisen, dass eine spezifische Scherkraft von 0,5 - 5N/mm in einem Temperaturbereich von -60 bis +150°C zwischen der thermoplastischen Verbindungsschicht und dem Kontaktelement vorliegt.

In einer bevorzugten Form der Halterung kann die Anschmelztemperatur der thermoplastischen Verbindungsschicht unterhalb der Schmelztemperatur des Kontaktmaterials und mindestens oberhalb der maximalen Betriebstemperatur der Halterung liegen.

Weiterhin kann bei einer Halterung das relative Verhältnis aus der Eindringtiefe der angeschmolzenen thermoplastischen Verbindungsschicht in das Kontaktelement zur spezifischen Scherkraft im Bereich von 0,5 bis 7 liegen. So führt beispielsweise eine Erhöhung der Eindringtiefe um 10 % zu einer Erhöhung der spezifischen Scherkraft von 5 bis 70 %.

Weiterhin kann bei einer Halterung das relative Verhältnis aus der Eindringtiefe des angeschmolzenen thermoplastischen ersten Verbindungselements in das zweite thermoplastische Verbindungselement zur spezifischen Scherkraft im Bereich von 0,5 bis 7 liegen. So führt beispielsweise eine Erhöhung der Eindringtiefe um 10 % zu einer Erhöhung der spezifischen Scherkraft von 5 bis 70%.

Des Weiteren kann bei einer Halterung der Hauptkörper ein elektronisches Bauteil sein, das mechanisch und/oder physikalisch an dem Kontaktelement lagegenau fixierbar ist.

Weiterhin kann bei einer Halterung der Hauptkörper eine Halterung sein, die mechanisch und/oder physikalisch an dem Kontaktelement lagegenau fixierbar ist.

Weiterhin wird ein elastomeres Bauteil bereitgestellt, das einen Grundkörper aus einem Grundkörpermaterial, und zumindest ein Kontaktelement mit jeweils einer Verbindungsseite und einer Kontaktseite, wobei sich die Kontaktseite von der Oberfläche des elastomeren Bauteils weg erstreckt, umfasst. Das Kontaktelement ist über die Verbindungsseite mit einem Bereich der Oberfläche des elastomeren Bauteils verbunden. Das Kontaktelement ist derart ausgebildet, dass es durch einen vorangegangenen Anschmelzvorgang einer thermoplastischen Verbindungsschicht einer Halterung in eine reversible Verbindung mit der thermoplastischen Verbindungsschicht bringbar ist.

Unter einem elastomeren Bauteil sollen im Folgenden formfeste, aber elastisch verformbare Ein- oder Mehrkomponentensysteme verstanden werden.

Weiterhin kann bei einem elastomeren Bauteil eine Eindringtiefe des Grundkörpermaterials in das Kontaktelement in einem Bereich zwischen 30% und 55% der Dicke des Kontaktelements liegen. Die untere Grenze wird beeinflusst durch die Forderung nach einer mindestens vorhandenen spezifischen Scherkraft von 2,5 N/mm der Verbindung zwischen der Halterung und dem elastomeren Bauteil. Die obere Grenze wird beeinflusst durch eine hinreichend große Eindringtiefe für die thermoplastische Verbindungsschicht in das Kontaktelement beim Verbinden der Halterung mit dem elastomeren Bauteil. Wenn das Kontaktelement aus einem thermoplastischen Material besteht, so kann die Eindringtiefe bei 0 % bis 5 % liegen.

In einem elastomeren Bauteil kann das Kontaktelement zumindest eine Gewebelage eines Gewebes enthalten. In einer weiteren Form des elastomeren Bauteils kann eine Vielzahl von Gewebelagen desselben Gewebes übereinander angeordnet sein, wobei die Orientierung der Gewebelangen relativ zueinander identisch oder beliebig sein kann.

Weiterhin kann bei einem elastomeren Bauteil das Gewebe wenigstens ein und vorzugsweise sämtliche der folgenden Merkmale aufweisen:

Der Fadendurchmesser für die Fäden des Gewebes liegt im Bereich zwischen 0,1 mm bis 1,3 mm, die Fadeneinstellung liegt im Bereich von 50 bis 200 Fäden pro Dezimeter. In einer weiteren Ausführungsform des elastomeren Bauteils können die Fadendurchmesser für die Fäden des Gewebes im Bereich zwischen 0,3 mm bis 1,3 mm liegen.

Vorzugsweise kann bei einem elastomeren Bauteil das Gewebe Fäden aus Polyamid oder Polyester enthalten. Der Einsatz der vorstehend erwähnten Fäden erlaubt im Vergleich zu Fäden aus natürlichen Fasern, die Verwendung einer thermoplastischen Verbindungsschicht mit einer höheren Anschmelztemperatur.

In einem elastomeren Bauteil kann das Gewebe natürliche Fasern enthalten. Unter natürlichen Fasern sollen sämtliche Fasern aus einem organischen Material verstanden werden, wie sie vorzugsweise von Pflanzen oder Tieren gebildet werden. So können die Fasern beispielsweise aus Baumwolle, Hanf, Jute, Wolle oder Seide hergestellt sein. Es kann anstatt eines Gewebes für das Kontaktelement eine Polyamid- / Polyester- oder sonstige thermoplastische Folie vorgesehen sein.

Weiterhin kann bei einem elastomeren Bauteil das Kontaktelement im Bereich seiner Kontaktseite bis zum Gebrauch von einer haftenden Schutzfolie abgedeckt sein. Somit lässt sich eine Verunreinigung des Kontaktelements während des Herstell- und Logistikprozesses effektiv verhindern. Die Schutzfolie lässt sich vorteilhafterweise mit geringem Kraftaufwand von dem Kontaktelement ablösen.

Vorzugsweise kann das elastomere Bauteil ein Reifen sein und die Kontaktseite des Gewebes kann innenseitig am Reifen angeordnet sein. Mit diesem Aufbau lässt sich z.B. ein Sensor mittels des Kontaktelements dauerhaft am Innerliner des Fahrzeugreifens befestigen und bei Bedarf, bspw. für die Runderneuerung oder die Reparatur des Sensors, zur Erneuerung des Sensors, usw. wieder zerstörungsfrei reversibel lösen. Anschließend kann eine neue Halterung bspw. mit einem neuen Sensor (oder mit einem neuen TAG) an dem Kontaktelement befestigt werden. Es kann auch ein neuer Sensor bzw. ein neues TAG in die alte Halterung eingesetzt werden, wobei dann die alte Halterung wieder dauerhaft am Innerliner des Fahrzeugreifens befestigt wird.

Die Erfindung erstreckt sich ausdrücklich auch auf einen Reifen mit der daran angeordneten Halterung für ein elektronisches Bauteil.

Weiterhin kann bei einem elastomeren Bauteil an der Kontaktseite des Kontaktelements eine Halterung reversibel befestigt sein.

Weiterhin kann bei einem elastomeren Bauteil das erste Verbindungselement des Hauptkörperelements eine ebene Gestaltung aufweisen und die Kontaktseite des zweiten Verbindungselements gekrümmt sein, wobei das Verhältnis der Dicke des thermoplastischen ersten Verbindungselementes zum Krümmungsradius der Kontaktseite des zweiten Verbindungselements im Bereich des 5-15-fachen der Länge bzw. des Durchmessers des ebenen Hauptkörperelements liegen kann. Für die Bestimmung der Länge des ebenen Hauptkörperelements wird diese in Krümmungsrichtung gemessen. Weiterhin kann das Verhältnis der Dicke des thermoplastischen ersten Verbindungselementes zum Krümmungsradius der Kontaktseite des zweiten Verbindungselements im Bereich des 5-10-fachen der Länge des ebenen Hauptkörperelements liegen. Dieses Verhältnis führt zu einer geringen Schichtdicke des thermoplastischen ersten Verbindungselements, die gleichzeitig zu einer sicheren und dauerhaften Verbindung an dem Hauptkörperelement führt.

Die Herleitung des vorstehend erwähnten Zusammenhangs basiert bei einem Fahrzeugreifen, dessen stärkere Krümmung in Umfangsrichtung vorliegt, auf dem Umstand, dass der ebene Sensorhalter bzw. der ebene Sensor in einer gekrümmten Schalengeometrie am Innerliner mit der Krümmung des Fahrzeugreifens befestigt wird. Je nach (Einbau)länge des Sensors in Umfangsrichtung wird ein Kreissegment mit einem zugehörigen Bogen (am Innerliner des Fahrzeugreifens) und einer Sehne (entsprechend der Unterseite des Sensors) gebildet. R bezeichnet den Radius des Fahrzeugreifens und A bezeichnet die Länge des Sensors in Umfangsrichtung des Fahrzeugreifens. Für die Höhe H einer derart gebildeten Sehne gilt:

$$H = R - \sqrt{(R^2 - A^2 / 4)}$$

Gemäß der Festlegung, daß die Dicke des thermoplastischen ersten Verbindungselements (mindestens) doppelt so groß sein soll wie die Sehnenhöhe H, ergibt sich daraus bei einem Sensordurchmesser von beispielsweise 50 mm in Verbindung mit bspw. einem Rollerreifen 90/90-10 (Durchmesser 416 mm) eine Schichtdicke von 3,1 mm, für bspw. einen 59/80R63 OTR-Reifen (Durchmesser 4000 mm) eine Mindestschichtdicke von 0,31 mm und für bspw. einen PKW-Reifen der Größe 205/55R16 (Durchmesser 632 mm) ergeben sich 2,00 mm.

Näherungsweise kann die Schichtdicke wie folgt berechnet werden:

$$D = 5..15 \cdot A / R \ oder \ D \cdot R = 5..15 \cdot A.$$

Mit Hilfe des vorstehend erwähnten Verhältnisses wird gemäß dem vorliegenden Befestigungssystem nicht nur eine stabile und dauerfeste Verbindung des Sensors bzw. des Sensorhalters mit dem Fahrzeugreifen im Ruhezustand des Fahrzeugs erzielt, sondern auch eine dynamische Entkopplung der Verbindung des befestigten Bauteils während der Abplattung des Fahrzeugreifens bei dessen Kontakt mit der Fahrbahn erreicht. Dies führt zu einer Erhöhung der möglichen Betriebsdauer und zu einer höheren Betriebssicherheit, wobei gleichzeitig eine höhere Einsatztemperatur für das Befestigungssystems ermöglicht wird.

Des Weiteren wird ein Verfahren zur Befestigung einer Halterung an einem elastomeren Bauteil bereitgestellt, das die folgenden Schritte umfasst:

- Anordnen des Kontaktelements derart, dass es sich in seiner Endlage in einem Bereich der Oberfläche des elastomeren Bauteils nach der Herstellung des elastomeren Bauteils befindet und/oder
- Herstellen des elastomeren Bauteils,. wobei das Material des Kontaktelements derart gewählt wird, dass die Eindringtiefe des Grundkörpermaterials des elastomeren Bauteils im Bereich zwischen 30% und 55% der Dicke des Kontaktelements liegt und das Kontaktelement mit dem elastomeren Bauteil irreversibel verbunden ist.

Bei einem durch den Herstellprozess des elastischen Bauteils vorgegebenen Vulkanisationsdruck kann die Eindringtiefe des Grundkörpermaterials des elastischen Bauteils, bspw. durch entsprechende Anpassung des Kontaktelements (z. B. Fadendichte, Fadendurchmesser etc.), variiert werden.

Das Verfahren kann weiterhin die Schritte umfassen:

- Erwärmen der thermoplastischen Verbindungsschicht der Halterung auf eine Fügetemperatur, die derart gewählt wird, dass ein An- und/oder Aufschmelzen der Kontaktseite des Kontaktelements verhindert wird,
- Anordnen der angeschmolzenen thermoplastischen Verbindungsschicht der Halterung im Bereich der Kontaktseite des Kontaktelements des elastomeren Bauteils und/oder
- Andrücken der Halterung an das elastomere Bauteil, wobei der Anpressdruck der angeschmolzenen thermoplastischen Verbindungsschicht auf den Kontaktbereich des Kontaktelements und die Anpresszeit derart gewählt werden, dass die spezifische Trennkraft zwischen der Halterung und dem Kontaktelement nach der Abkühlung der thermoplastischen Verbindungsschicht mindestens 2,5 N/mm bei 20°C beträgt.

Die Temperatur für das Anschmelzen der thermoplastischen Verbindungsschicht kann bei mindestens 120°C liegen. Die Temperatur für das Anschmelzen der thermoplastischen Verbindungsschicht kann größer 180°C sein. Der Schmelzvorgang durch Temperatureinwirkung findet dabei vorzugsweise in einem Zeitraum von 5 bis 35 Sekunden statt.

Bei dem Verfahren kann der Anpressdruck für die angeschmolzene thermoplastische Verbindungsschicht im Bereich von 0,05 MPa bis 2 MPa, vorzugsweise in einem Bereich von 0,2 bis 1,0 MPa, liegen. Diese Anpressdrücke bewirken eine ausreichend große Eindringtiefe der thermoplastischen Verbindungsschicht in die Kontaktseite des Kontaktelements für den Erhalt einer stabilen Verbindung, wobei die maximale Eindringtiefe der Verbindungsschicht durch die vorhandene Eindringtiefe des Grundkörpermaterials in das Kontaktelement begrenzt ist. Dadurch kann die erforderliche Wärmezufuhr beim Lösen des Halters von dem elastomeren Bauteil begrenzt sein, da die anzuschmelzende Materialmenge geringer ist als bspw. bei einer größeren Durchdringung der Verbindungsschicht. Folglich werden eine dauerhafte Verbindung und gleichzeitig eine gute Ablösbarkeit der Halterung sichergestellt.

Bei dem Verfahren kann die Energiezufuhr für das Anschmelzen der thermoplastischen Verbindungsschicht der Halterung mittels UHF, Ultraschall oder thermisch erfolgen.

Bei dem Verfahren kann die Eindringtiefe der angeschmolzenen thermoplastischen Verbindungsschicht in die Kontaktseite des Kontaktelements zumindest 30% der Dicke des Kontaktelements betragen, und diese kann im Wesentlichen auch nach dem Abkühlen der thermoplastischen Verbindungsschicht beibehalten werden.

Weiterhin kann bei dem Verfahren zur Befestigung einer Halterung an einem elastomeren Bauteil zumindest ein Verfahrensschritt automatisch oder zumindest teilweise automatisch unter Verwendung einer entsprechenden Handlingvorrichtung erfolgen. Weiterhin bietet das erfindungsgemäße Befestigungssystem im Kontext einer Neuherstellung von Fahrzeugreifen die Möglichkeit, ein einfach und kostengünstig anzubringendes Kontaktelement für die Halterung vorzusehen, welches an der Innenseite des Fahrzeugreifens weder erhaben bzw. relevant nach innen abstehend noch störend ausgebildet ist. Zudem kann dieses Kontaktelement einfach bzw. mehrfach angeordnet an den verschiedensten Stellen des Innerliners des Fahrzeugreifens undefiniert bzw. vordefiniert angeordnet sein und beispielsweise durch eine entsprechende Kennzeichnung z. B. mittels eindeutiger Farbgebung optisch erkennbar und somit vollautomatisch durch entsprechende sensorische Detektionseinrichtungen (z. B. optische Bilderkennung) detektiert werden. Durch diese automatische Detektion ist ein vollautomatischer Nachfolgeprozess und somit ein Anbringen der erfindungsgemäßen Halterung im Fahrzeugreifen bzw. an sonstigen elastomeren Bauteilen möglich.

Vorteilhafte Ausgestaltungen und weitere Details der vorliegenden Erfindung werden im Folgenden anhand verschiedener Ausführungsbeispiele mit Bezug auf schematische Figuren beschrieben.

Fig. 1 zeigt eine perspektivische Ansicht einer Halterung und ein elastomeres Bauteil gemäß der vorliegenden Erfindung,

Fig. 2 zeigt eine seitliche Ansicht eines Reifens mit einer erfindungsgemäßen Halterung,

Fig. 3 zeigt eine schematische Schnittansicht eines elastomeren Bauteils und

Fig. 4 zeigt schematisch in einer Schnittansicht einen Bereich eines elastomeren Bauteils mit einem Gewebe.

In der nachfolgenden Figurenbeschreibung werden gemäß den vorstehenden Ausführungen die Begriffe 'erstes Verbindungselement' und 'thermoplastische Verbindungsschicht' in der Beschreibung äquivalent verwendet. Dasselbe gilt für die Verwendung der Begriffe 'zweites Verbindungselement' und 'Kontaktelement'.

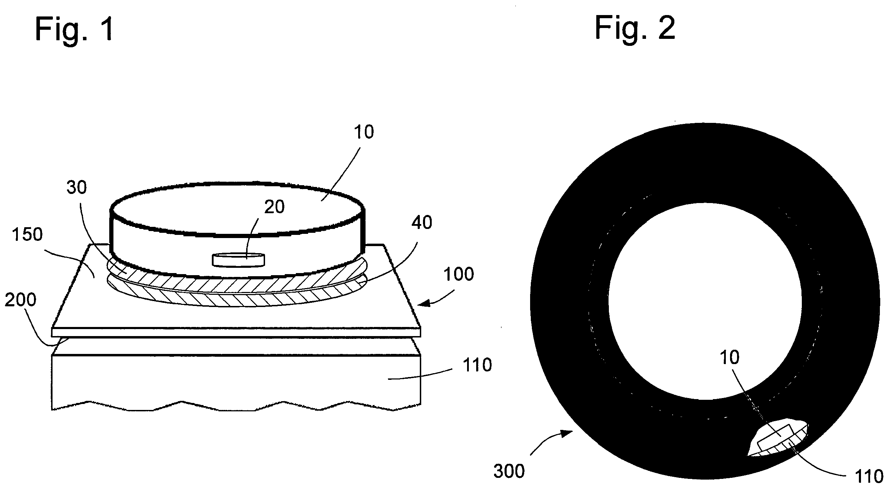

Bezugnehmend auf Fig. 1 ist schematisch eine Halterung für einen Sensor 20, der mittels eines Kontaktelements 100, hier eines Gewebes, mit einem elastomeren Bauteil verbunden ist, in einer explosionsartigen Darstellung gezeigt. Die Halterung dient in allgemeiner Form zur Aufnahme eines oder mehrerer elektronischer Bauteile, hier eines Sensors 20, wobei die Halterung auch beliebige andere Bauteile aufnehmen kann, die keine elektronischen Komponenten aufweisen.

Die Halterung weist einen Hauptkörper 10 auf, der aus einem Hauptkörpermaterial besteht. Das Hauptkörpermaterial kann beispielsweise ein Kunststoff oder ein elastomeres Material sein. Der Sensor 20 dient zur Erfassung von Messwerten, wie sie beispielsweise in einem Automobil während der Betriebszeit erfasst werden. Der Sensor 20 kann in Abhängigkeit von dem Einsatzzweck ein aktiver oder ein passiver Sensor sein. Der Sensor 20 steht mit dem Hauptkörper 10 der Halterung in Kontakt, wobei der Sensor 20 vorzugsweise derart mit dem Hauptkörper in Verbindung steht, dass der Sensor 20 seine Einbauposition im Wesentlichen beibehält. Dies kann beispielsweise durch ein Eingießen des Sensors 20 in den Hauptkörper 10 der Halterung oder mittels Verkleben realisiert werden. Es sind auch formschlüssige und/oder kraftschlüssige Verbindungen zwischen dem Sensor 20 und dem Hauptkörper 10 möglich.

Die Halterung weist an einem Ende des Hauptkörpers 10 eine Übergangsschicht 30 auf, die mit dem Hauptkörper 10 verbunden ist. Die Übergangsschicht 30 dient zur Verbindung der Halterung mit einer thermoplastischen Verbindungsschicht 40, welche die Schnittstelle für die Verbindung der Halterung mit einem elastomeren Bauteil bildet. Es ist jedoch bei bestimmten Anwendungen auch möglich, dass die Übergangsschicht 30 entfällt, bzw. dass das Hauptkörpermaterial mit dem Material der Übergangsschicht 30 identisch ist.

Des Weiteren weist die Halterung eine thermoplastische Verbindungsschicht 40 auf, die mit der Übergangsschicht 30 verbunden ist (sofern vorhanden). Die thermoplastische Verbindungsschicht 40 kann dabei die Übergangsschicht 30 ganz oder teilweise bedecken. Die Dicke der thermoplastischen Verbindungsschicht 40 liegt in Abhängigkeit von der in der Halterung auftretenden Verformung in einem Bereich von 0,3 mm bis 3,0 mm, wobei zusätzlich noch die Dicke des Kontaktelements 100 bei der Festlegung der Dickes der thermoplastische Verbindungsschicht 40 zu berücksichtigen ist.

Das Kontaktelement 100, bzw. das Gewebe, wiederum ist sowohl mit der thermoplastische Verbindungsschicht 40 als auch mit einem Grundkörper 110 eines elastomeren Bauteils verbunden. Die Verbindung des Kontaktelements 100 mit der thermoplastische Verbindungsschicht 40 wird mittels einer Infiltration der thermoplastische Verbindungsschicht 40 in das Kontaktelement 100 realisiert, wobei hierfür ein Anschmelzvorgang der thermoplastische Verbindungsschicht 40 vorgeschaltet ist.

Das Kontaktelement 100 bzw. das Gewebe weist jeweils eine Verbindungsseite 200 und eine Kontaktseite 150 auf, wobei sich die Kontaktseite 150 von der Oberfläche des elastomeren Bauteils weg erstreckt. Das Kontaktelement 100 bzw. das Gewebe ist über die Verbindungsseite 200 mit dem elastomeren Bauteil verbunden.

Für die Ausbildung einer möglichst großen Trennkraft der Verbindung von thermoplastischer Verbindungsschicht 40 mit dem Gewebe sollte das Gewebe die folgenden Eigenschaften aufweisen:

Die Art des Gewebes kann beliebig gewählt werden, während der Fadendurchmesser der Fäden des Gewebes im Bereich zwischen 0,1 mm und 1,3 mm liegt, wobei dieser Wert in Anhängigkeit von dem Einsatzzweck und den Beanspruchungen während des Betriebs zu wählen ist. So wurde beispielsweise für die Verbindung eines Sensorhalters mit dem Innerliner eines Fahrzeugreifens ein Fadendurchmesser von 0,3 mm als besonders vorteilhaft ermittelt. Im Hinblick auf die Fadeneinstellung ist eine Auswahl aus einem Bereich von 50 bis 200 Fäden pro Dezimeter für die Erzielung einer möglichst großen spezifischen Scherkraft besonders vorteilhaft.

Aufgrund der vorstehend erwähnten Infiltrierung der thermoplastischen Verbindungsschicht 40 in das Gewebe zur Verbindung der Halterung mit dem elastomeren Bauteil ergibt sich nach dem Abkühlen der thermoplastischen Verbindungsschicht 40 eine bestimmte Eindringtiefe der thermoplastische Verbindungsschicht 40 in das Gewebe bzw. das Kontaktelement 100. Dabei sollte die Eindringtiefe der thermoplastischen Verbindungsschicht 40 mindestens 30% der Dicke des Gewebes bzw. des Kontaktelements 100 betragen. Somit können beispielsweise spezifische Scherkräfte zwischen der thermoplastischen Verbindungsschicht 40 und dem Gewebe von mehr als 2,5 N/mm erzielt werden.

Das Gewebe bzw. das Kontaktelement 100 ist mit dem elastischen Bauteil verbunden, welches einen Grundkörper 110 aus einem Grundkörpermaterial aufweist. Das Gewebe ist mit dem Grundkörper 110 ebenfalls mittels einer Infiltrierung des Grundkörpermaterials in dem Gewebe verbunden, wodurch eine irreversible mechanische Verbindung zwischen dem Gewebe und dem Grundkörper 110 entsteht. Dabei liegt die Eindringtiefe des Grundkörpermaterials in das Gewebe im Bereich der Verbindungsseite 200 vorzugsweise in einem Bereich von 30% - 55% der Dicke des Gewebes.

Die Eindringtiefe des Grundkörpermaterials kann durch die Auswahl des Grundkörpermaterials, die Art und Beschaffenheit des Gewebes bzw. des Kontaktmaterials 100 und, im Falle eines Fahrzeugreifens als ein elastomeres Bauteil, mittels der Wahl des Vulkanisationsdrucks gezielt eingestellt werden.

Fig. 2 zeigt einen Fahrzeugreifen 300, an dem ein erfindungsgemäßer Hauptkörper 10 im Bereich des Grundkörpers 110 des Fahrzeugreifens 300 befestigt ist. Der Hauptkörper 10 kann ein Sensorhalter sein und der Grundkörper 110 ein Innerliner. Der Fahrzeugreifen 300 weist eine erfindungsgemäße reversible mechanische Verbindung mit der thermoplastischen Verbindungsschicht (nicht dargestellt) des Hauptkörpers 10 unter Verwendung eines Gewebes (nicht dargestellt) auf.

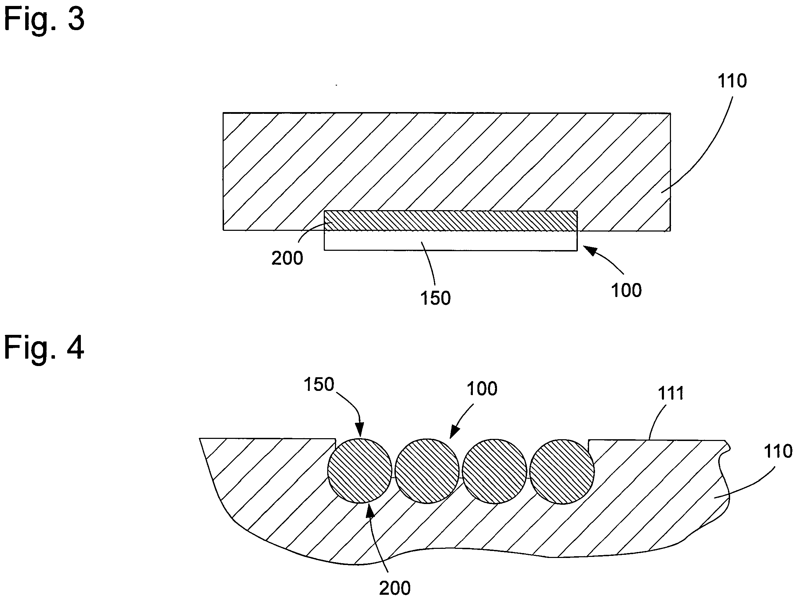

Fig. 3 zeigt in einer schematischen Darstellung eine erfindungsgemäße reversible mechanische/physikalische Verbindung des Grundkörpers 110 (z.B. des Innerliners eines Reifens) mit dem Kontaktelement 100, welches zur Verbindung mit der erfindungsgemäßen Halterung ausgebildet ist. Das Kontaktelement 100 weist einen Verbindungsbereich 200 auf, der in diesem Beispiel bis etwa zur Hälfte der Dicke des Kontaktelements 100 von dem Grundkörpermaterial infiltriert ist. Die Eindringtiefe des Grundkörpermaterials ist entlang der Längsrichtung des Kontaktelements 100 im Wesentlichen konstant.

Auf der gegenüber liegenden Seite des Verbindungsbereichs 200 befindet sich der Kontaktbereich 150 des Kontaktelements 100, der vor der Verbindung des elastomeren Bauteils mit der erfindungsgemäßen Halterung weder mit dem Grundkörpermaterial noch mit der thermoplastischen Verbindungsschicht (nicht dargestellt) der Halterung (nicht dargestellt) infiltriert ist. Bis zum Gebrauch des elastomeren Bauteils ist der Kontaktbereich 150 mit einer Schutzfolie (nicht dargestellt) abgedeckt.

Fig. 4 zeigt in einer schematischen seitlichen Schnittansicht ein elastomeres Bauteil, dessen Grundkörper 110 mit einem Gewebe versehen ist. Das Gewebe weist eine Vielzahl von Fäden über dessen Breite auf.

Der Kontaktbereich 150 enthält kein Grundkörpermaterial. Der Kontaktbereich 150 des Kontaktelements 100 bzw. des Gewebes ist im Wesentlichen bündig (auf gleicher Höhe) mit der Oberfläche 111 des Grundkörpers 110 angeordnet. Weiterhin kann das Gewebe auch derart mit dem Grundkörper 110 verbunden sein, dass der Kontaktbereich 150 des Gewebes etwas über die Oberfläche 111 des Grundkörpers 110 hinausragt, wobei die Eindringtiefe des Grundkörpermaterials in den Verbindungsbereich in einem Bereich von 30% bis 55% der Dicke des Gewebes während dem Herstellungsprozess des elastomeren Bauteils eingestellt werden kann.

Die gezeigten Ausführungsbeispiele sind rein illustrativ und nicht beschränkend auszulegen. An ihnen können zahlreiche Änderungen vorgenommen werden, ohne jedoch den Schutzumfang der Ansprüche zu verlassen.

**Patentansprüche**

1. Befestigungssystem, zum

   Anbringen einer Halterung an einem elastomeren Bauteil, umfassend
   ein Hauptkörperelement (10),
   ein erstes Verbindungselement (40), und
   ein zweites Verbindungselement (100) mit einer einem Grundkörper (110) des elastomeren Bauteils zugewandten Verbindungsseite (200) und einer dieser gegenüberliegenden Kontaktseite (150), wobei das zweite Verbindungselement (100) über die Verbindungsseite (200) mit dem Grundkörper (110) verbunden ist, und
   wobei zumindest das erste oder das zweite Verbindungselement (40, 100) ein thermoplastisches Verbindungselement ist und durch einen Anschmelzvorgang des thermoplastischen Verbindungselements (40, 100) mit dem jeweilig anderen Verbindungselement (40, 100) in eine reversible Verbindung bringbar ist bzw. diese Verbindung durch Erwärmen zerstörungsfrei reversibel lösbar ist;
   wobei das zweite Verbindungselement (100) zumindest eine Gewebelage eines Gewebes enthält, und das Gewebe folgende Merkmale aufweist:

   - der Fadendurchmesser für die Fäden des Gewebes liegt im Bereich zwischen 0,1 mm bis 1,3 mm, und
   - die Fadeneinstellung liegt im Bereich von 50 bis 200 Fäden pro Dezimeter.

2. Befestigungssystem nach Anspruch 1, **dadurch gekennzeichnet, dass** die Dicke des ersten Verbindungselements (40) zwischen 0,3 mm und 3,0 mm liegt.

3. Befestigungssystem nach Anspruch 1 oder 2, **dadurch gekennzeichnet, dass** das zweite Verbindungselement (100) eine derartige Oberfläche aufweist, dass eine spezifische Scherkraft von zumindest 2,5 N/mm bei 20°C zwischen dem ersten Verbindungselement (40) und dem zweiten Verbindungselement (100) vorliegt.

4. Befestigungssystem nach zumindest einem der Ansprüche 1 oder 2, **dadurch gekennzeichnet, dass** das zweite Verbindungselement (100) eine derartige Oberfläche aufweist, dass eine spezifische Scherkraft von 0,5 - 5 N/mm in einem Temperaturbereich von -60 bis +150°C zwischen dem ersten Verbindungselement (40) und dem zweiten Verbindungselement (100) vorliegt.

5. Befestigungssystem nach zumindest einem der Ansprüche 1-4, **dadurch gekennzeichnet, dass** das erste Verbindungselement (40) ein thermoplastisches Verbindungselement ist und durch einen vorangegangenen Anschmelzvorgang in die reversible Verbindung mit dem zweiten Verbindungselement (100) bringbar ist.

6. Befestigungssystem nach Anspruch 5, **dadurch gekennzeichnet, dass** die Anschmelztemperatur des ersten Verbindungselements (40)

   - gleich oder unterhalb der Schmelztemperatur des zweiten Verbindungselements (100) und
   - mindestens oberhalb der maximalen Betriebstemperatur des Hauptkörperelements liegt.

7. Befestigungssystem nach zumindest einem der Ansprüche 5-6, **dadurch gekennzeichnet, dass** das relative Verhältnis aus der Eindringtiefe des angeschmolzenen ersten Verbindungselements (40) in das zweite Verbindungselement (100) zur spezifischen Scherkraft im Bereich von 0,5 bis 7 liegt.

8. Befestigungssystem nach zumindest einem der Ansprüche 1-7, **dadurch gekennzeichnet, dass** das Hauptkörperelement ein elektronisches Bauteil (20) oder eine Halterung zur Aufnahme eines elektronischen Bauteils (20) ist, das mechanisch und/oder physikalisch an dem zweiten Verbindungselement (100) lagegenau fixierbar ist.

9. Befestigungssystem nach Anspruch 1 oder 8, **dadurch gekennzeichnet, dass** das zweite Verbindungselement (100) flächenbündig mit der Oberfläche (111) des Grundkörpers (110) des elastomeren Bauteils abschließt.

10. Befestigungssystem nach zumindest einem der Ansprüche 1-9, **dadurch gekennzeichnet, dass** eine Eindringtiefe des Grundkörpermaterials in das zweite Verbindungselement (100) in einem Bereich zwischen 30% und 55% der Dicke des zweiten Verbindungselements (100) liegt.

11. Befestigungssystem nach Anspruch 1, **dadurch gekennzeichnet, dass** das Gewebe Fäden aus Polyamid und/oder Polyester oder natürliche Fasern enthält.

12. Befestigungssystem nach zumindest einem der Ansprüche 1-11, **dadurch gekennzeichnet, dass** der Grundkörper ein Innerliner eines Fahrzeugreifens ist ist und die Kontaktseite (150) des Gewebes im Inneren des Reifens (300) angeordnet ist.

13. Befestigungssystem nach Anspruch 1, **dadurch gekennzeichnet, dass** das erste Verbindungselement (40) des Hauptkörperelements eine ebene Gestaltung aufweist und die Kontaktseite (150) des zweiten Verbindungselements (100) gekrümmt ist, wobei das Verhältnis der Dicke des thermoplastischen ersten Verbindungselementes (40) zum Krümmungsradius der Kontaktseite (150) des zweiten Verbindungselements (100) im Bereich des 5-15-fachen der Länge des ebenen Hauptkörperelements liegt.

14. Verfahren zur Befestigung eines Hauptkörperelements eines Befestigungssystems gemäß einem der Ansprüche 1-13 an einem elastomeren Bauteil eines Befestigungssystems gemäß einem der Ansprüche 1-13 mit den folgenden Schritten:

- Anordnen des zweiten Verbindungselements (100) derart, dass es sich in seiner Endlage in einem Bereich der Oberfläche (111) des elastomeren Bauteils nach der Herstellung des elastomeren Bauteils befindet,
- Herstellung des elastomeren Bauteils, wobei das Material des zweiten Verbindungselements (100) derart ausgewählt ist, dass die Eindringtiefe des Grundkörpermaterials des elastomeren Bauteils im Bereich zwischen 30% und 55% der Dicke des zweiten Verbindungselements (100) liegt und das zweite Verbindungselement (100) mit dem elastomeren Bauteil irreversibel verbunden ist.

15. Verfahren gemäß Anspruch 14, **gekennzeichnet durch**:

- Erwärmen des thermoplastischen ersten Verbindungselements (40) des Hauptkörperelements auf eine Fügetemperatur, die derart gewählt wird, dass ein komplettes An- und/oder Aufschmelzen des zweiten Verbindungselements (100) ganz oder teilweise verhindert wird,
- Anordnen des angeschmolzenen thermoplastischen ersten Verbindungselements (40) im Bereich der Kontaktseite (150) des zweiten Verbindungselements (100),
- Andrücken des Hauptkörperelements an das elastomere Bauteil, wobei der Anpressdruck des angeschmolzenen thermoplastischen ersten Verbindungselements (40) auf den Kontaktbereich (150) des zweiten Verbindungselements (100) und die Anpresszeit derart gewählt werden, dass der Trennwiderstand zwischen dem Hauptkörperelement und dem zweiten Verbindungselement (100) nach der Abkühlung des thermoplastischen zweiten Verbindungselements (40) mindestens 2,5 N/mm bei 20°C beträgt.

**Claims**

1. A fastening system for attaching a retainer to an elastomer component, comprising
a main body element (10),
a first connecting element (40), and
a second connecting element (100) with a connection side (200) facing a base body (110) of said elastomer component and a contact side (150) opposite thereto, wherein said second connecting element (100) is connected to said base body (110) via said connection side (200), and
wherein at least the first or the second connecting element (40, 100) is a thermoplastic connecting element and is, by a partial melting process of the thermoplastic connecting element (40, 100), reversibly connectable to the respective other connecting element (40, 100) or is reversibly disconnectable therefrom by heating in a non-destructive manner;
wherein said second connecting element (100) comprises at least one fabric ply of a fabric, and said fabric has the following features:

- the thread diameter for the threads of said fabric is in the range between 0.1 mm and 1.3 mm, and
- the thread setting is in the range of 50 to 200 threads per decimetre.

2. The fastening system according to claim 1, **characterized in that** the thickness of said first connecting element (40) is between 0.3 mm and 3.0 mm.

3. The fastening system according to claim 1 or 2, **characterized in that** said second connecting element (100) has such a surface that a specific shear force of at least 2.5 N/mm at 20 °C is present between said first connecting element (40) and said second connecting element (100).

4. The fastening system according to claim 1 or 2, **characterized in that** said second connecting element (100) has such a surface that a specific shear force of 0.5-5 N/mm in a temperature range from -60 to +150 °C. is present between said first connecting element (40) and said second connecting element (100).

5. The fastening system according to at least one of the claims 1-4, **characterized in that** said first connecting element (40) is a thermoplastic connecting element and is reversibly connectable to said second connecting element (100) by a preceding partial melting process.

6. The fastening system according to claim 5, **characterized in that** the melting temperature of said first connecting element (40) is

   - equal to or below the melting temperature of said second connecting element (100) and
   - at least above the maximum operating temperature of said main body element.

7. The fastening system according to at least one of the claims 5-6, **characterized in that** the relative ratio of the penetration depth of the partially molten first connecting element (40) into said second connecting element (100) to the specific shear force is in the range of 0.5 to 7.

8. The fastening system according to at least one of the claims 1-7, **characterized in that** said main body element is an electronic component (20) or a retainer for receiving an electronic component (20) which can be fixed mechanically and/or physically to said second connecting element (100) in a positionally accurate manner.

9. The fastening system according to claim 1 or 8, wherein said second connecting element (100) terminates flush with said surface (111) of said basic body (110) of said elastomeric component.

10. The fastening system according to at least one of the claims 1-9, **characterized in that** a penetration depth of the basic body material into said second connecting element (100) is in a range between 30 % and 55 % of the thickness of said second connecting element (100).

11. The fastening system according to claim 1, **characterized in that** said fabric contains threads made of polyamide and/or polyester or natural fibres.

12. The fastening system according to claim 1, **characterized in that** said basic body is an inner-liner of a vehicle tire and said contact side (150) of said fabric is arranged inside said tire (300).

13. The fastening system according to claim 1, **characterized in that** said first connecting element (40) of said main body element has a planar design and said contact side (150) of said second connecting element (100) is curved, wherein the ratio of the thickness of the thermoplastic first connecting element (40) to the radius of curvature of said contact side (150) of said second connecting element (100) is in the range of 5-15 times the length of said planar main body element.

14. A method for fastening a main body element of a fastening system according to one of the claims 1-13 to an elastomer component of a fastening system according to one of the claims 1-13, said method comprising the following steps:

   - disposing said second connecting element (100) such that it is, in its final position, in a region of said surface (111) of said elastomer component after manufacture of said elastomer component
   - manufacturing said elastomer component, wherein the material of said second connecting element (100) is selected such that the penetration depth of said base body material of said elastomer component is in the range between 30 % and 55 % of the thickness of said second connecting element (100) and said second connecting element (100) is irreversibly connected to said elastomer component.

15. The method as claimed in claim 14, **characterized by**:

   - heating the thermoplastic first connecting element (40) of said main body element to a joining temperature selected such that complete partial melting and/or fusing of said second connecting element (100) is completely or partially prevented,
- disposing the partially molten thermoplastic first connecting element (40) in the region of said contact side (150) of said second connecting element (100),
- pressing said main body element to said elastomer component, wherein the contact pressure of said partially molten thermoplastic first connecting element (40) onto said contact region (150) of said second connecting element (100) and the pressing time are selected such that the separating resistance between said main body element and said second connecting element (100) is at least 2.5 N/mm at 20 °C after the cooling of said thermoplastic second connecting element (40).

**Revendications**

1. Système de fixation pour
monter une monture sur un composant en élastomère, comprenant
un élément de corps principal (10),
un premier élément de liaison (40), et
un second élément de liaison (100) présentant une face de liaison (200) tournée vers un corps de base (110) du composant en élastomère et une face de contact (150) opposée à celle-ci, le second élément de liaison (100) étant relié au corps de base (110) par la face de liaison (200), et
au moins le premier ou le second élément de liaison (40, 100) est un élément de liaison thermoplastique et peut être mis en liaison réversible avec l'autre élément de liaison respectif (40, 100) par une opération de fusion superficielle de l'élément de liaison thermoplastique (40, 100) et cette liaison peut être désolidarisée de façon réversible sans destruction par un réchauffement,
le second élément de liaison (100) comprend au moins une couche d'un tissu et le tissu présente les caractéristiques suivantes :

- le diamètre de fil pour les fils du tissu se situe dans la plage entre 0,1 mm à 1,3 mm, et
- le réglage du fil est dans la plage de 50 à 200 fils par décimètre.

2. Système de fixation selon la revendication 1, **caractérisé en ce que** l'épaisseur du premier élément de liaison (40) est comprise entre 0,3 mm et 3,0 mm.

3. Système de fixation selon la revendication 1 ou 2, **caractérisé en ce que** le second élément de liaison (100) présente une surface telle qu'une force de cisaillement spécifique d'au moins 2,5 N/mm à 20 °C se présente entre le premier élément de liaison (40) et le second élément de liaison (100).

4. Système de fixation selon l'une au moins des revendications 1 ou 2, **caractérisé en ce que** le second élément de liaison (100) présente une surface telle qu'une force de cisaillement spécifique de 0,5 à 5 N/mm dans une plage de température de -60 à +150 °C se présente entre le premier élément de liaison (40) et le second élément de liaison (100).

5. Système de fixation selon l'une au moins des revendications 1 à 4, **caractérisé en ce que** le premier élément de liaison (40) est un élément de liaison thermoplastique et peut être mis en liaison réversible avec le second élément de liaison (100) par une opération précédente de fusion superficielle.

6. Système de fixation selon la revendication 5, **caractérisé en ce que** la température de fusion superficielle du premier élément de liaison (40)

- est égale ou inférieure à la température de fusion du second élément de liaison (100), et
- est au moins supérieure à la température de fonctionnement maximale de l'élément de corps principal.

7. Système de fixation selon l'une au moins des revendications 5 à 6, **caractérisé en ce que** la relation relative de la profondeur de pénétration du premier élément de liaison (40) fondu superficiellement dans le second élément de liaison (100) par rapport à la force de cisaillement spécifique est dans la plage de 0,5 à 7.

8. Système de fixation selon l'une au moins des revendications 1 à 7, **caractérisé en ce que** l'élément de corps principal est un composant électronique (20) ou une monture pour recevoir un composant électronique (20), qui peut être fixé par voie mécanique et/ou physique précisément en position sur le second élément de liaison (100).

9.  Système de fixation selon la revendication 1 ou 8, **caractérisé en ce que** le second élément de liaison (100) se termine en affleurement avec la surface (111) du corps de base (110) du composant en élastomère.

10. Système de fixation selon l'une au moins des revendications 1 à 9, **caractérisé en ce qu'**une profondeur de pénétration du matériau du corps de base dans le second élément de liaison (100) est dans une plage comprise entre 30 % et 55 % de l'épaisseur du second élément de liaison (100).

11. Système de fixation selon la revendication 1, **caractérisé en ce que** le tissu comprend des fils en polyamide et/ou en polyester ou en fibres naturelles.

12. Système de fixation selon l'une au moins des revendications 1 à 11, **caractérisé en ce que** le corps de base est un revêtement intérieur d'un pneumatique de véhicule et la face de contact (150) du tissu est agencée à l'intérieur du pneumatique (300).

13. Système de fixation selon la revendication 1, **caractérisé en ce que** le premier élément de liaison (40) de l'élément de corps principal présente une configuration plane et la face de contact (150) du second élément de liaison (100) est recourbée, la relation de l'épaisseur du premier élément de liaison thermoplastique (40) par rapport au rayon de courbure de la face de contact (150) du second élément de liaison (100) étant dans la plage de 5 à 15 fois la longueur de l'élément de corps principal plan.

14. Procédé de fixation d'un élément de corps principal d'un système de fixation selon l'une des revendications 1 à 13 sur un composant en élastomère d'un système de fixation selon l'une des revendications 1 à 13, comprenant les étapes suivantes consistant à :

    - agencer le second élément de liaison (100) de telle sorte que dans sa position finale il se trouve dans une zone de la surface (111) du composant en élastomère, une fois que le composant en élastomère est fabriqué,
    - réaliser le composant en élastomère, le matériau du second élément de liaison (100) étant choisi tel que la profondeur de pénétration du matériau du corps de base du composant en élastomère est dans la plage comprise entre 30 % et 55 % de l'épaisseur du second élément de liaison (100), et le second élément de liaison (100) est relié de façon irréversible au composant en élastomère.

15. Procédé selon la revendication 14, **caractérisé par** les étapes consistant à :

    - réchauffer le premier élément de liaison thermoplastique (40) de l'élément de corps principal à une température d'assemblage qui est choisie de telle sorte qu'une fusion superficielle et/ou approfondie complète du second élément de liaison (100) est empêchée entièrement ou en partie,
    - agencer le premier élément de liaison thermoplastique (40) fondu superficiellement dans la zone de la face de contact (150) du second élément de liaison (100),
    - appuyer l'élément de corps principal sur le composant en élastomère, la pression d'appui du premier élément de liaison thermoplastique (40) fondu superficiellement sur la zone de contact (150) du second élément de liaison (100) et la durée d'appui étant choisies de telle sorte que la résistance de séparation entre l'élément de corps principal et le second élément de liaison (100), une fois que le second élément de liaison thermoplastique (40) est refroidi, est d'au moins 2,5 N/mm à 20 °C.

Fig. 2

Fig. 1

Fig. 3

Fig. 4

**IN DER BESCHREIBUNG AUFGEFÜHRTE DOKUMENTE**

**In der Beschreibung aufgeführte Patentdokumente**

- WO 03095243 A1
- EP 1070580 A2
- EP 1048493 A2
- EP 1707406 B1

**In der Beschreibung aufgeführte Nicht-Patentliteratur**

- *Scotch-Weld TM Schmelzklebstoffe, htto://www.bossert-hamburg.de/3M JetMelt ScotchWeld 052006.pdf*
- Thermoplastische Schmelzklebestoffe. Ruderer Klebetechnik GmbH